(19) Europäisches Patentamt
European Patent Office
Office européen des brevets

(11) Veröffentlichungsnummer: **0 093 369**
**B1**

(12) # EUROPÄISCHE PATENTSCHRIFT

(45) Veröffentlichungstag der Patentschrift: **23.07.86**

(51) Int. Cl.⁴: **C 09 B 62/012,** D 06 P 3/66, D 06 P 3/10

(21) Anmeldenummer: **83104025.8**

(22) Anmeldetag: **25.04.83**

(54) **Reaktivfarbstoffe.**

(30) Priorität: **05.05.82 DE 3216787**

(43) Veröffentlichungstag der Anmeldung: **09.11.83 Patentblatt 83/45**

(45) Bekanntmachung des Hinweises auf die Patenterteilung: **23.07.86 Patentblatt 86/30**

(84) Benannte Vertragsstaaten: **CH DE FR GB LI**

(56) Entgegenhaltungen:
**FR-A-2 029 102**
**FR-A-2 340 356**
**US-A-4 138 395**

(73) Patentinhaber: **BAYER AG, Konzernverwaltung RP Patentabteilung, D-5090 Leverkusen 1 Bayerwerk (DE)**

(72) Erfinder: **Mennicke, Winfried, Dr., Steglitzerstrasse 8, D-5090 Leverkusen (DE)**
Erfinder: **Fürstenwerth, Hauke, Dr., Morgengraben 3, D-5000 Köln 80 (DE)**

**EP 0 093 369 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Gegenstand der vorliegenden Erfindung sind Farbstoffe der Formel

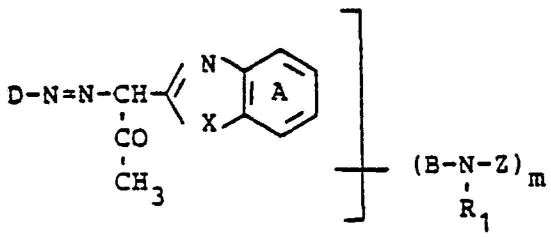

(I)

worin

D aromatisch-carbocyclischer oder aromatisch-heterocyclischer Rest, insbesondere Rest einer Diazokomponente,

X O, S, N—$R_2$

B direkte Bindung oder Brückenglied

Z faseraktiver Rest

$R_1$ Wasserstoff, Alkyl

$R_2$ Wasserstoff, Alkyl, Aryl, Aralkyl oder Cycloalkyl

m 1 oder 2

und worin der Ring A weitere Substituenten enthalten kann, und deren Metallkomplexe.

Bevorzugte Farbstoffe sind solche der Formel

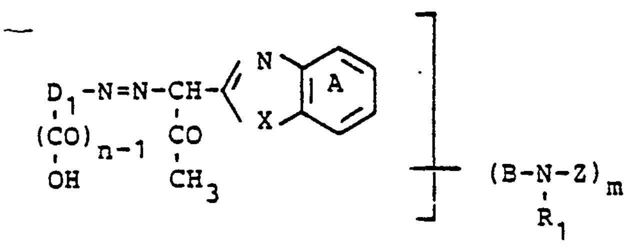

(II)

worin

$D_1$ vicinal 2-wertiger Rest der Benzol- oder Naphthalinreihe

n und m 1 oder 2

und die restlichen Substituenten die in Formel (I) angegebene Bedeutung haben und deren Metallkomplexe, insbesondere die Kupfer-, Kobalt- und Chromkomplexe.

Die Reste D und $D_1$ sowie der Ring A können in der Farbstoffchemie übliche Substituenten aufweisen, beispielsweise, $SO_3H$, Acylamino, Halogen, Arylazo, Sulfonamid, COOH, Carbonamid, Alkyl, Alkoxy, Halogen, $NO_2$, Alkylsulfonyl, Arylsulfonyl; darüber hinaus kann A beispielsweise auch SCN und CN enthalten.

Die Gruppe

B—N—Z
|
$R_1$

kann an A, D oder X gebunden sein.

Bevorzugte Acyl-, Alkyl- und Alkoxygruppen sind solche mit 1 bis 4 C-Atomen, die gegebenenfalls weiter substituiert sein können, beispielsweise durch CN, Cl, OH, $C_1$—$C_4$-Alkoxy, Phenyl.

Bevorzugte Acylaminogruppen sind insbesondere $C_1$—$C_4$-Alkylcarbonylamino, $C_1$—$C_4$-Alkoxycarbonylamino, $C_1$—$C_4$-Alkylsulfonamino, wobei die Alkylreste gegebenenfalls substituiert sein können.

Die Sulfonamid- und Carbonamidgruppen können mono- oder disubstituiert sein, beispielsweise durch gegebenenfalls substituiertes $C_1$—$C_4$-Alkyl oder durch Aryl, insbesondere gegebenenfalls substituiertes Phenyl.

Bevorzugte Arylreste sind insbesondere gegebenenfalls substituierte Phenylreste mit Substituenten wie Halogen, $NO_2$, $C_1$—$C_4$-Alkoxy, $C_1$—$C_4$-Alkyl.

Unter Halogen wird F, Br und vor allem Cl verstanden.

Geeignete zweiwertige Brückenglieder B sind beispielsweise —$CH_2$—, —O—$C_1$—$C_4$-Alkylen-, —NH—$CH_2$—$CH_2$—, —NH—CO—$CH_2$—,

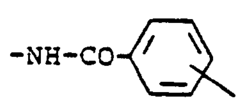 .

Unter faseraktiven Resten Z werden solche verstanden, die eine oder mehrere reaktive Gruppen an einem heterocyclischen oder aliphatischen Rest gebunden enthalten und beim Aufbringen auf

Cellulosematerialien in Gegenwart säurebindender Mittel bei gegebenenfalls erhöhter Temperatur mit den Hydroxygruppen der Cellulose oder beim Aufbringen auf Polyamidfasern, wie Wolle, mit den NH-Gruppen dieser Faser unter Ausbildung kovalenter Bindungen zu reagieren vermögen.

Derartige faserreaktive Gruppierungen sind aus der Literatur in großer Zahl bekannt, z.B. aus Venkataraman: The Chemistry of Synthetic Dyes, Band VI, Kapitel 1, Seite 1—209.

Besonders bevorzugt sind die Kupfer-, Kobalt- und Chromkomplexe von Monoazoverbindungen der Formel

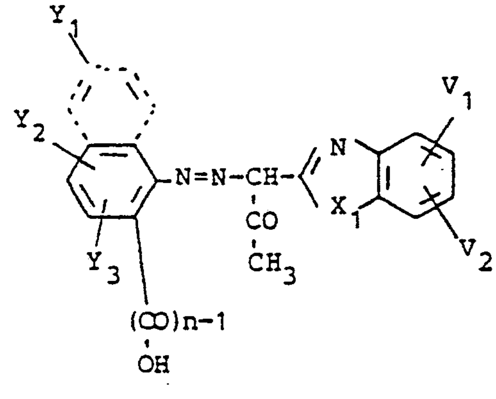

(III)

worin

n 1 oder 2

$X_1$ Schwefel oder $NR_3$

$Y_1$ Wasserstoff, $NO_2$, $SO_3H$ oder

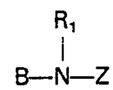

$Y_2$ Wasserstoff, $NO_2$, Cl, $SO_3H$ oder

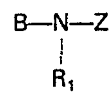

$Y_3$ Wasserstoff, $NO_2$, Cl, Alkyl, Alkoxy, Alkylsulfonyl, Arylsulfonyl, $SO_3H$, $SO_2NW_1W_2$ oder Arylazo

$W_1$ und $W_2$ Wasserstoff oder Alkyl

$V_1$ Wasserstoff, Alkyl, Alkoxy, Cl, Br, $NO_2$, SCN, CN, Alkylsulfonyl, Arylsulfonyl, $SO_2$—$NW_1W_2$, $SO_3H$, $COOW_1$ oder

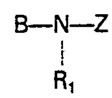

$V_2$ Wasserstoff, Alkyl, Alkoxy, Cl oder Br

$R_3$ Wasserstoff, Alkyl, Aralkyl oder Aryl

B eine direkte Bindung oder ein zweiwertiges Brückenglied

$R_1$ Wasserstoff oder Alkyl und

Z Rest einer Reaktivkomponente

bedeuten,

mit 1—2 Gruppen

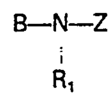

Besonders bevorzugt sind dabei die Kobaltkomplexe der Farbstoffe (III) mit

$X_1$ Schwefel oder $NR_3$

$Y_1$ Wasserstoff, $NO_2$, $SO_3H$ oder

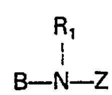

$Y_2$ Wasserstoff, $NO_2$, Cl, $SO_3H$ oder

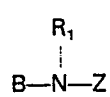

$Y_3$ Wasserstoff, $NO_2$, Cl, $CH_3$, $OCH_3$, $C_1$—$C_2$-Alkylsulfonyl, $SO_3H$, $SO_2NW_1W_2$ oder Arylzao

$W_1$ und $W_2$ Wasserstoff oder $C_1$—$C_2$-Alkyl

$V_1$ Wasserstoff, $CH_3$, $OCH_3$, Cl, Br, $NO_2$, SCN, $C_1$—$C_2$-Alkylsulfonyl, $COOW_1$ oder

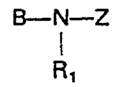

$V_2$ Wasserstoff, $CH_3$, Cl oder Br.

Die Kupferkomplexe liegen bevorzugt als 1:1-Komplexe, die Kobalt- und Chromkomplexe bevorzugt als 1:2-Komplexe vor. Im Falle der 1:2-Komplexe kann der zweite Farbstoff ein Farbstoff der Formel (I)—(III) oder ein beliebiger metallisierbarer, gegebenenfalls eine Rekactivgruppe tragender Azo-, Azomethin- oder Formazanfarbstoff sein. Derartige metallisierbare Farbstoffe sind in der Literatur in großer Zahl beschrieben; unter ihnen werden die folgenden Farbstoffe der Formel (IV) bevorzugt:

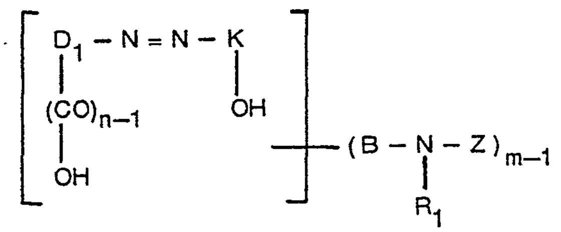

(IV)

worin

$D_1$ n, m, B, Z und $R_1$ die obengenannte Bedeutung haben und

K eine von der Kupplungskomponente der Farbstoffe (I) verschiedene Kupplungskomponente, insbesondere eine der Acetessigsäurearylid- Pyrazol-, 6-Hydroxy-2-pyridon- und Naphtholreihe bedeutet.

Bevorzugte 1:2-Mischkomplexe sind die Kobaltmischkomplexe der Formel

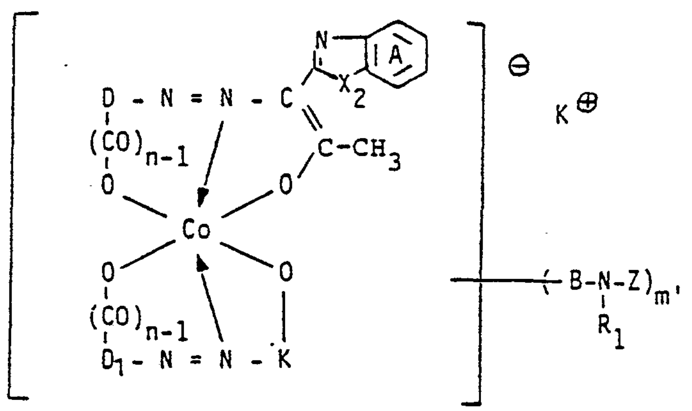

(V)

worin

$X_2$ Schwefel, gegenbenenfalls substituiertes N-Phenyl, insbesondere durch Cl, $CH_3$, $OCH_3$, COOH, $SO_3H$, $SO_2$—$NH_2$ oder NH—Z substituiertes N-Phenyl oder N—$C_1$—$C_4$-Alkyl,

$K^{\oplus}$ ein Kation, vorzugsweise ein Alkaliion, wie $Li^{\oplus}$ oder $Na^{\oplus}$, oder ein Ammonium, wie $NH_4^{\oplus}$ oder Alkyl-, Dialkyl- oder Trialkylammonium wie beispielsweise Diethanolammonium oder Triethanolammonium, und

m' 1, 2 oder 3 bedeuten,

wobei D und $D_1$ gleich oder verschieden sein können, sowie deren Mischungen mit den beiden entsprechenden symmetrischen Kobalt-1:2-Komplexen, wobei der Farbstoff (I) mindestens einen Reaktivrest enthält.

Aus der Reihe der Kobaltkomplexe der Formel (V) sind die Kobaltmischkomplexe der Formel (VI) sowie wiederum deren Mischungen mit den aus Formel (VI) ableitbaren symmetrischen 1:2-Kobaltkomplexen bevorzugt:

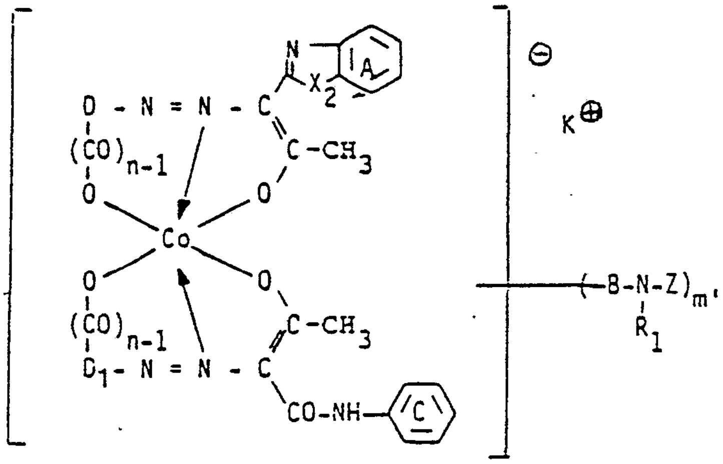

(VI)

wobei Ring C die in der Chemie der Azofarbstoffe üblichen Substituenten tragen kann, vorzugsweise $SO_3H$, $SO_2NW_1W_2$, $C_1$—$C_2$-Alkylsulfonyl, COOH, CO—$NW_1W_2$, $NO_2$, Cl, $CH_3$, $OCH_3$ und die Gruppe

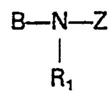

und wobei der Farbstoff (I) mindestens eine Rektivgruppe enthält.

Ganz besonders bevorzugt sind Farbstoffe der Formel (I) bis (VI), bei denen im Falle von X, $X_1$ und $X_2$ = Schwefel der Ring A nicht weiter substituiert ist.

Die Kupplungskomponenten der Formel (VII)

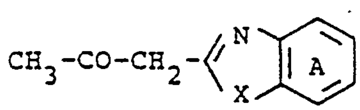

(VII)

sind bekannt bzw. nach an sich bekannten Methoden zugänglich (vgl. DE—OS 2 137 372, US—P 2 233 873 sowie J. Chem. Soc. *1948*, 303 und J. Ind. Chem. Soc. *1977*, 921), indem man Verbindungen der Formel (VIII)

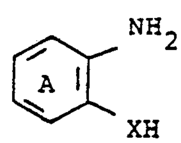

(VIII)

mit Acetessigester bzw. — im Falle von X = O — zweckmäßigerweise mit dem Iminoether

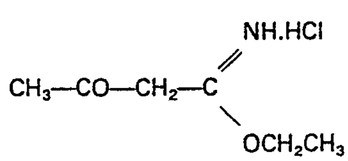

(IX)

umsetzt.

Die Herstellung der erfindungsgemäßen Farbstoffe kann nach verschiedenen Verfahren erfolgen, wobei die Reaktivgruppen vor oder nach Kupplung bzw. Metallisierung eingeführt werden und zwar entweder an der Diazokomponente oder an der Kupplungskomponente.

Die Metallisierung erfolgt dabei in an sich bekannter Weise mit kupfer-, kobalt- und chromabgebenden Mitteln, wozu auch unter Verwendung entsprechend abgewandelter Diazokomponenten die Bedingungen der entmethylierenden Kupferung und Chromierung (vgl. DE—OS 3 010 872) und der oxidativen Kupferung (vgl. Angew. Chem. *70* (1958), Seite 232—238) angewandt werden können. Bei der Chromierung werden vorzugsweise in schwach saurem bis schwach alkalischem Milieu 1:2-Chromkomplexe aus 2 Mol Farbstoff der Formel (I) oder nach dem bekannten zwistufigen Verfahren einheitliche Chrommischkomplexe aus je 1 Mol Farbstoff der Formeln (I) und (IV) hergestellt. Im Falle der 1:2-Kobaltkomplexe werden Kobaltierungen von Farbstoffen der Formel (I) allein oder von Mischungen solcher der Formeln (I) und (IV) bevorzugt. Dabei

können die zu kobaltierenden Farbstoffmischungen äquimolar sein oder zwischen den molaren Verhältnissen von 1:4 bis 4:1 schwanken.

Beispiele der Herstellungsverfahren sind beispielsweise die folgenden:

1. Diazotierte Amine

$$D—NH_2 \qquad (X)$$

werden mit Kupplungskomponenten

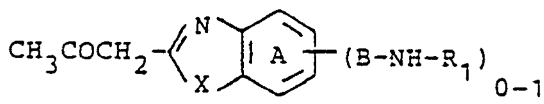

(XI)

gekuppelt, gegebenenfalls mit einer Reaktivkomponente

$$Z—Y \qquad (XII)$$

worin

Y anionische abspaltbarer Rest, insbesondere Halogen wie F, Cl oder Br bedeutet, umgesetzt und anschließend, gegebenenfalls zusammen mit einem beliebigen metallisierbaren Farbstoff, metallisiert und anschließend, falls erforderlich, mit (XII) umgesetzt.

2. Diazotierte Amine

$$(Q—B)_{0-1}—D—NH_2 \qquad (XIII)$$

worin

Q eine in eine Aminogruppe überführbare Gruppe, beispielsweise Nitro oder Acylamino, insbesondere Acetylamino, werden mit Kupplungskomponenten

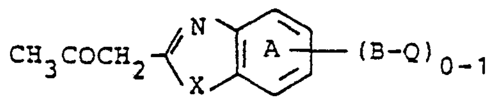

(XIV)

umgesetzt, wobei mindestens eine Gruppe —B—Q vorhanden sein muß. Anschließend werden die Gruppen —B—Q in die Gruppen

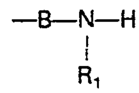

und diese in die Gruppen

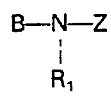

umgewandelt und die resultierenden Farbstoffe metallisiert, oder nach der Umsetzung von (XIII) und (XIV) wird metallisiert, und dann erst werden die Gruppen Q—B— in die Gruppen

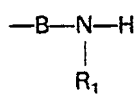

und die Gruppen

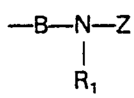

umgewandelt, oder aber nach der Umsetzung von (XIII) mit (XIV) werden die Gruppen Q—B— in die Gruppen

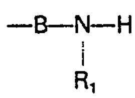

und nach der Metallisierungsstufe in die Gruppen

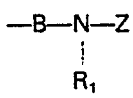

umgewandelt.

Im Falle der Herstellung gemischter Komplexe wird dabei in der Metallisierungsstufe in Gegenwart von 1 Mol eines beliebigen metallisierbaren Farbstoffs gearbeitet.

Die Umwandlung der Gruppen —B—Q in die Gruppen

—B—NH
|
$R_1$

erfolgt nach bekannten Verfahren, im Falle von Nitrogruppen beispielsweise durch Reduktion mit Sulfiden, im Falle von Acylaminogruppen durch Verseifung.

Geeignete Verbindungen (XII) sind beispielsweise die Halogenide, insbesondere die Chloride und Fluoride, der als Reaktivgruppen bezeichneten aliphatischen oder aromatischen Acylreste und Hetarylreste Z. Eine Aufstellung der in großer Zahl bekannten Reaktivkomponenten Y—Z findet sich beispielsweise in der DE—OS 2 655 625 auf den Seiten 17—22. Im folgenden ist nur eine kleine bevorzugte Auswahl derartiger Verbindungen gekannt:

Cyanurchlorid, Cyanurfluorid, Dichlor-monoamino- und monosubstituierte -monoamino-s-triazine, Difluormonoamino- und monosubstituierte -monoamino-s-triazine, 2,4,6-Trifluor-5-chlorpyrimidin, 2,4,5,6-Tetrachlorpyrimidin, 2-Methylsulfonyl-4,5-dichlor-6-methylpyrimidin, 2,3-Dichlorchinoxalin-6-carbonsäurechlorid, 2,3-Dibrompropionylchlorid, 2-Bromacryloylchlorid oder (vgl. DE—OS 2 935 681) 2-Brom-3-phenylsulfonylpropionylchlorid.

Geeignete reaktivgruppenfreie Diazoverbindungen sind beispielsweise:

2-Aminobenzoesäure,
2-Aminobenzoesäure-4- oder -5-sulfonsäure,
2-Aminobenzoesäure-4- oder -5-sulfonamid,
4-, 5- oder 6-Chlor-2-aminobenzoesäure,
4- oder 5-Nitro-2-aminobenzoesäure,
2-Amino-1-hydroxybenzol,
4- oder 5-Chlor-2-amino-1-hydroxybenzol,
4,6-Dichlor-2-amino-1-hydroxybenzol,
4- oder 5-Nitro-2-amino-1-hydroxybenzol,
4,6-Dinitro-2-amino-1-hydroxybenzol,
4-Chlor- und 4-Methyl- und 4-Acetamino-6-nitro-2-amino-1-hydroxybenzol,
6-Methyl- und 6-Acetamino- und 6-Chlor-4-nitro-2-amino-1-hydroxybenzol,
6-Acetamino-4-chlor-2-amino-1-hydroxybenzol,
4-Acetamino-6-chlor-2-amino-1-hydroxybenzol,
4-Chlor-5-nitro-2-amino-1-hydroxybenzol,
4- oder 5-Methyl-2-amino-1-hydroxybenzol,
4-Methoxy-2-amino-1-hydroxybenzol,
2-Amino-1-hydroxybenzol-4- oder -5-methylsulfon,
2-Amino-1-hydroxybenzol-4- oder -5-phenylsulfon,
2-Amino-1-hydroxybenzol-4- oder -5-sulfonamid,
2-Amino-1-hydroxybenzol-4- oder -5-sulfonilid,
4-Nitro-2-amino-1-hydroxybenzol-5- oder -6-sulfonamid,
2-Amino-1-hydroxybenzol-4- oder -5-sulfonsäure,
4-Nitro-2-amino-1-hydroxybenzol-5- oder -6-sulfonsäure,
5-Nitro- oder 6-Nitro-2-amino-1-hydroxybenzol-4-sulfonsäure,
6-Chlor-2-amino-1-hydroxybenzol-4-sulfonsäure,
4-Chlor-2-amino-1-hydroxybenzol-6-sulfonsäure,
4-Methyl-2-amino-1-hydroxybenzol-5- oder -6-sulfonsäure,
1-Amino-2-hydroxynaphthalin-4-sulfonsäure,
6-Nitro-1-amino-2-hydroxynaphthalin-4-sulfonsäure.

Beispiele für reaktivgruppenhaltige Diazokomponenten der Formel

Z—N—B—D—$NH_2$ sind:
|
$R_1$

1-Amino-4- oder -5-Z-aminobenzol-2-sulfonsäure,
1-Amino-5-Z-amino-4-methylbenzol-2-sulfonsäure,
1-Amino-4-Z-amino-5-methoxybenzol-2-sulfonsäure,
1-Amino-4-Z-amino-2-methylbenzol-6-sulfonsäure,
1-Amino-4-Z-aminobenzol-2,6-disulfonsäure,
1-Amino-5-(4'- oder -3'-Z-aminobenzoylamino)-benzol-2-sulfonsäure,
2-Amino-5-Z-amino-4'-methyl-3'-sulfo-1,1'-diphenylsulfon,
1-Amino-5-Z-aminonaphthalin-3,7-disulfonsäure,
2-Amino-6-Z-aminonaphthalin-4,8-disulfonsäure,
2-Amino-5-Z-aminomethylennaphthalin-1-sulfonsäure,

1-Amino-5-Z-aminomethylen-4-methoxy-2-sulfonsäure,
4-Z-Amino-2-amino-1-hydroxybenzol-6-sulfonsäure,
6-Z-Amino-2-amino-1-hydroxybenzol-4-sulfonsäure,
6-Z-Amino-1-amino-2-hydroxynaphthalin-4-sulfonsäure,
4-Nitro-6-Z-amino-2-amino-1-hydroxybenzol,
4-Z-Amino-6-nitro-2-amino-1-hydroxybenzol,
4-Chlor-6-Z-amino-2-amino-1-hydroxybenzol,
4-Z-Amino-6-chlor-2-amino-1-hydroxybenzol,
4-Methyl-5- oder -6-Z-amino-2-amino-1-hydroxybenzol,
4- oder 5-Z-Amino-2-amino-1-hydroxybenzol,
4-Methoxy-5-Z-amino-2-amino-1-hydroxybenzol,
4- oder 5-Z-Amino-2-aminobenzoesäure,
4-(4'-Z-Aminobenzolazo)-2-amino-1-hydroxybenzol,
4-(4'- oder -5'-Z-Amino-2'-sulfonsäurebenzolazo)-2-amino-1-hydroxybenzol.

Weitere geeignete Diazokomponenten sind:
1-Amino-4-nitrobenzol-3-sulfonsäure,
1-Amino-4-nitrobenzol,
1-Amino-3-nitro-2-methylbenzol-5-sulfonsäure,
4-Amino-4'-nitrostilben-2,2'-disulfonsäure,

sowie
1-Aminobenzol-2-, -3- oder -4-sulfonsäure,
1-Aminobenzol,
2-Aminonaphthalin-1-sulfonsäure,
2-Aminonaphthalin-1,5-, -1,7-, -3,6-, -3,7- oder -4,8-disulfonsäure,
1-Amino-4-chlorbenzol-2-sulfonsäure,
1-Amino-2-methoxybenzol-5-sulfonsäure,
1-Aminobenzol-3- oder -4-carbonsäure,
1-Amino-2,4-dimethylbenzol-6-sulfonsäure,
1-Aminobenzol-2,5-disulfonsäure,
1-Amino-2-, -3- oder -4-chlorbenzol.

Als Kupplungskomponenten der Formel (VII) bzw. (XI) — mit und ohne reaktivgruppenhaltige Gruppierung —NH—Z — kommen beispielsweise in Betracht:

2-Acetonylbenzthiazol, 6-Z-Amino-, 6-Acetamino-, 6-Methyl-, 6-Methoxy-, 6-Ethoxy-, 6-Nitro-, 6-Rhodano-, 6-Chlor-, 6-Carbonsäure-, 6-Carbonsäureamid-, 6-Sulfonsäure-, 6-Sulfonsäureamid-, 6-Methylsulfonyl- und 6-Ethylsulfonyl-2-acetonyl-benzthiazol, 5,6-Dichlor- und 5,6-Dibrom-2-acetonylbenzthiazol, 4-Sulfonsäure-6-methyl- und -6-chlor-2-acetonylbenzthiazol, 2-Acetonylbenzimidazol, 1-N-Methyl-, 1-N-Benzyl- und 1-N-Phenyl-2-acetonylbenzimidazol, 5-Z-Amino-, 5-Acetamino-, 5-Methyl-, 5-Methoxy-, 5-Ethoxy-, 5-Chlor-, 5-Nitro-, 5-Carbonsäure- und 5-Carbonsäureamid-2-acetonylbenzimidazol, Gemisch aus 4- und 5-Methyl-2-acetonylbenzimidazol, 4,5-Dimethyl- und 5,6-Dimethyl-2-acetonylbenzimidazol, 6-Sulfonsäure-, 6-Carbonsäure-, 6-Sulfonamid-, 6-Diethylsulfonamid-, 6-Phenylsulfonamid- und 6-Ethylsulfonyl-1-N-phenyl-2-acetonyl-benzimidazol, 6-Sulfonsäure-, 6-Carbonsäure-, 6-Sufonamid-, 6-Diethylsulfonamid-, 6-Phenylsulfonamid- und 6-Ethylsulfonyl-1-N-(4'-Z-aminophenyl)-2-acetonylbenzimidazol.

Geeignete Kupplungskomponenten für die gegebenenfalls mitzuverwendenden metallkomplexbildenden Farbstoffe sind:
Acetessigsäureanilid,
Acetessigsäure-2-methoxy- oder -2-methylanilid,
Acetessigsäureanilid-3- oder -4-sulfonsäure,
Acetessigsäure-4-Z-aminoanilid-3,5-disulfonsäure,
1-Phenyl-3-methyl-5-pyrazolon,
1-(Phenyl-3'- oder -4'-sulfonsäure)-3-methyl-5-pyrazolon,
1-(3'- oder -4'-Z-Aminophenyl)-3-methyl-5-pyrazolon,
1-(2'-Methyl-3'-Z-aminophenyl-5'-sulfonsäure)-3-methyl-5-pyrazolon,
1-N-Ethyl-3-carbonamid-4-methyl-6-hydroxy-2-pyridon,
2-Naphthol,
2-Naphthol-6-sulfonsäure oder -3,6-disulfonsäure,
5,8-Dichlor-1-naphthol,
1-Naphthol-3,6-disulfonsäure,
3-Z-Amino-2-naphthol-7-sulfonsäure,
8-Z-Amino-1-naphthol-3,6- oder -3,5-disulfonsäure,
6- oder 7-Z-Amino-1-naphthol-3-sulfonsäure,
8-Z-Amino-2-naphthol.

In den o.g. Verbindungen steht Z dabei vorzugsweise für Dichlortriazinyl, Monochlor- und Monofluor-amino-, —$C_1$—$C_4$-alkylamino und -phenylamino sowie -mono- und -disulfophenylamino-triazin; 2,3-Dichlorchinoxalincarbonyl- und Fluorpyrimidinyl, insbesondere 2,4-Difluor-5-chlorpyrimidinyl.

Die neuen Farbstoffe werden im allgemeinen durch Aussalzen oder Sprühtrocknen in Form ihrer Alkalisalze, insbesondere der Lithium- und Natriumsalze, isoliert. Sie stellen wertvolle Produkte dar und finden bevorzugtes Interesse zum Färben und Bedrucken von hydroxyl-gruppen- und stickstoffhaltigen Materialien, insbesondere von Textilmaterialien aus nativer und regenerierter Cellulose, aus Wolle, Seide und synthetischen Polyamid- und Polyurethanfasern. Die neuen Farbstoffe unterschieden sich deutlich von den aus US—A 4 138 395 sowie DE—A 1 903 761 und DE—A 2 604 220 bekannten Farbstoffen änlicher Konstitution, bei denen der charakteristische Acetonylrest an einen Rest der Benzol- oder Naphthalinreihe gebunden ist.

Beispiel 1

24,6 g diazotierte 2-Amino-6-acetamino-1-hydroxybenzol-4-sulfonsäure werden mit der Suspension von 19,1 g Acetonylbenzthiazol in 100 ml Wasser vereinigt und unter Zugabe von insgesamt ca. 12 ml 10 n Natronlauge bei pH 10,5 gerüht. Nach beendeter Kupplung wird der gebildete Farbstoff abgesaugt, in 120 ml 10 n Salzsäure und 360 ml Wasser verteilt und zur Verseifung der Acetaminogruppe 5 Stunden unter Rückfluß erhitzt. Nach Abkühlen auf 70°C wird der aminogruppenhaltige Farbstoff nochmals isoliert, dann in 200 ml Wasser mit Natronlauge bei pH 8,5 gelöst und bei diesem pH mit 11,9 g $CoCl_2.6H_2O$ bei 70°C kobaltiert. Wenn die Lösung des Kobaltkomplexfarbstoffes auf Raumtemperatur abgekühlt ist, läßt man die Lösung von 16,9 g 2,4,6-Trifluor-5-chlorpyrimidin in 60 ml Aceton zutropfen und hält dabei durch Zugabe von 10%iger Sodalösung den pH im Bereich von 6 bis 7. Nach beendeter Acylierung wird der reaktivgruppenhaltige Kobaltkomplex der Formel

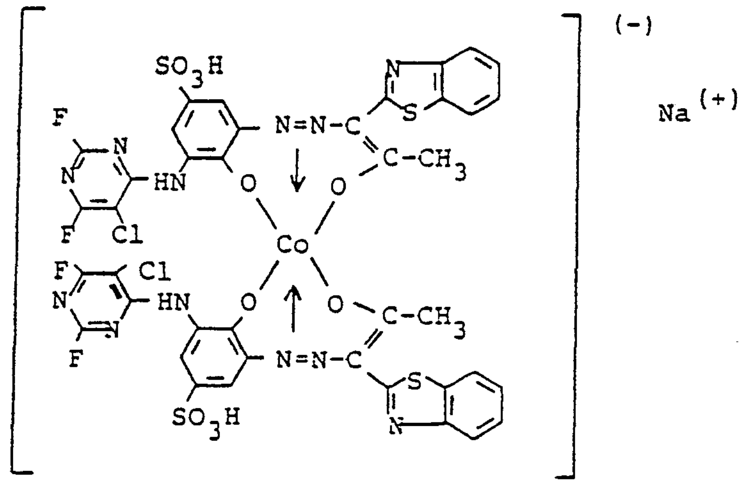

durch Eintragen von 20% Kochsalz gefällt, abgesaugt und im Vakuum bei 40°C getrocknet. Man erhält ein braunes Pulver, welches nach den üblichen Verfahren auf Wolle und Baumwolle schokoladenbraune Färbungen von hoher Licht- und Naßechtheit liefert.

Beispiel 2

Verfährt man wie in Beispiel 1, metallisiert jedoch durch mehrstündiges Erhitzen mit 40 g einer basischen Chromacetatlösung (10,5 Gew.-% $Cr_2O_3$) bei pH 5 is 6, so erhält man den 1:2-Chromkomplexfarbstoff der Formel

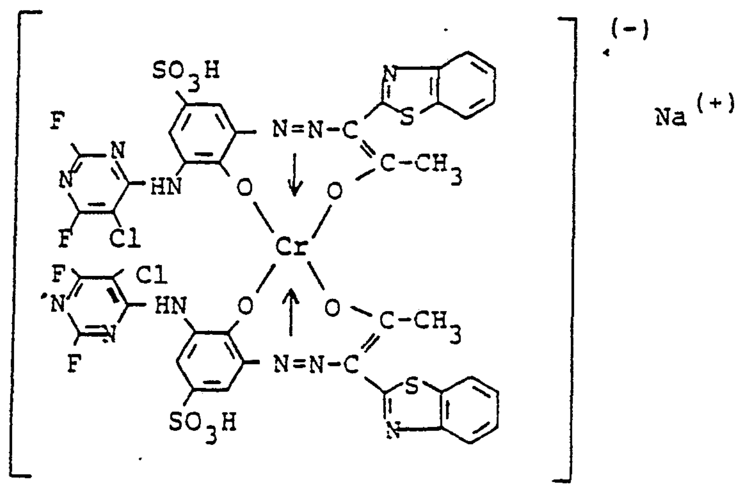

Dieser färbt Wolle und Baumwolle in echten gelbstichig roten Tönen.

Beispiel 3

Tauscht man in Beispiel 1 die 19,1 g Acetonylbenzthiazol gegen ein Gemisch aus 9,55 g Acetonylbenzthiazol und 8,85 g Acetessiganilid, so resultiert daraus ein Gemisch von 1:2-Kobaltkomplexfarbstoffen, welches neben den beiden symmetrischen Farbstoffen als Hauptprodukt den unsymmetrischen Farbstoff der Formel

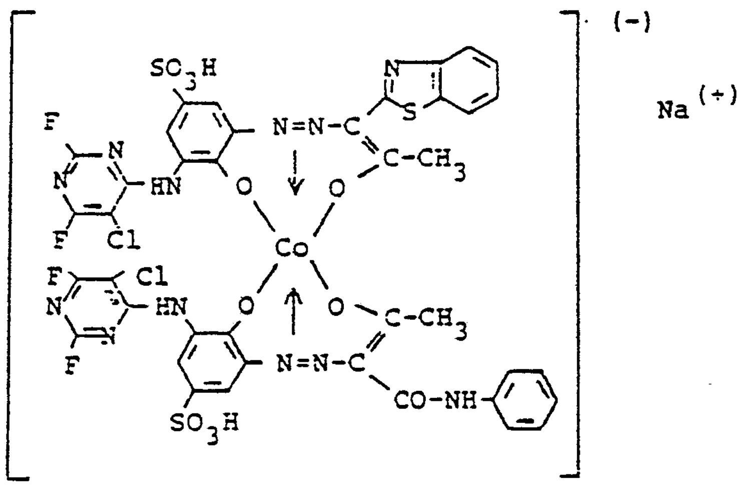

enthält.

Getrocknet und gemörsert stellt dieses Gemisch ein braunes Pulver dar, welches Wolle und Baumwolle in licht- und naßechten gelbbraunen Nuancen färbt.

Beispiel 4

Der Kupferkomplex der Formel

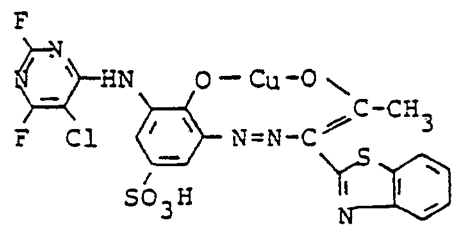

hergestellt durch Kupferung des entsprechenden reaktivgruppenhaltigen Farbstoffs, gibt auf Wolle und Baumwolle klare, rotbraune Färbungen.

Zu gleichfalls wertvollen schokoladenbraunen bis rötlich braunen Kobaltkomplexfarbstoffen gelangt man dadurch, daß man die im folgenden aufgeführten Diazoverbindungen, Kupplungskomponenten und Reaktivkomponenten nach dem Verfahren des Beispiels 1 miteinander umsetzt.

| Beispiel | Diazokomponente | Kupplungskomponente | Reaktivkomponente |
|---|---|---|---|
| 5 | 2-Amino-6-acetamino-1-hydroxybenzol-4-sulfonsäure | 2-Acetonylbenzthiazol | Cyanurchlorid |
| 6 | " | " | 2,4-Dichlor-6(4'-sulfophenyl-amino)-triazin |
| 7 | " | " | 2,4-Difluor-6-(4'-sulfophenyl-amino)-triazin |
| 8 | " | " | 2,4-Difluor-6-(3'-sulfophenyl-amino)-triazin |
| 9 | " | " | 2,3-Dichlorchinoxalin-6-carbonsäurechlorid |
| 10 | " | " | 2,4-Dichlor-6-aminotriazin |
| 11 | " | " | 2,3-Dibrompropionyl-chlorid |

| Beispiel | Diazokomponente | Kupplungskomponente | Reaktivkomponente |
|---|---|---|---|
| 12 | " | 2-Acetonylbenzthiazol | 3-Chlor-2-phenylsulfonyl-propionylchlorid |
| 13 | " | " | 2,4,5,6-Tetrachlor-pyrimidin |
| 14 | " | 6-Methoxy-2-acetonyl-benzthiazol | 2,4,6-Trifluor-5-chlorpyrimidin |
| 15 | 2-Amino-4-acetamino-1-hydroxybenzol-6-sulfonsäure | 2-Acetonylbenzthiazol | " |
| 16 | 4-(5'-Acetamino-2'-sulfobenzol-azo)-2-amino-1-hydroxybenzol | " | 2,4,6-Trifluor-5-chlor-pyrimidin |
| 17 | 4-(4'-Acetamino-2'-sulfobenzol-azo)-2-amino-1-hydroxybenzol | " | " |
| 18 | 4-Nitro-6-acetamino-2-amino-1-hydroxybenzol | Gemisch 2-Acetonylbenz-thiazol-5- und -6-sulfonsäure | " |
| 19 | 4-Acetamino-6-nitro-2-amino-1-hydroxybenzol | " | " |
| 20 | 4-Chlor-6-acetamino-2-amino-1-hydroxybenzol | " | 2,4-Difluor-6-(3'-sulfophenyl-amino)-triazin |
| 21 | 4-(4'-Acetaminobenzolazo)-2-amino-1-hydroxybenzol | " | 2,4,6-Trifluor-5-chlor-pyrimidin |
| 22 | 4-Nitro-2-amino-1-hydroxybenzol | 6-Acetamino-2-acetonyl-benzthiazol | 2,4-Difluor-6-(4'-sulfophenyl-amino)-triazin |
| 23 | 6-Nitro-2-amino-1-hydroxy-benzol-4-sulfonsäure | " | 2,4,6-Trifluor-5-chlor-pyrimidin |
| 24 | 4-Chlor-2-amino-1-hydroxy-benzol-6-sulfonsäure | " | " |
| 25 | 1-Amino-2-hydroxynaphthalin-4-sulfonsäure | " | " |
| 26 | 4-Nitro-6-chlor-2-amino-1-hydroxybenzol | " | 2,4-Difluor-6-(4'-sulfophenyl-amino)-triazin |

Beispiel 27

26,8 g diazotierte 6-Nitro-1-amino-2-hydroxynaphthalin-4-sulfonsäure werden 3 Stunden lang mit der wäßrigen Suspension von 19,1 g 2-Acetonylbenzthiazol in 400 ml Wasser bei pH 10,5 miteinander verrührt. Nach beendeter Kupplung wird die Nitrogruppe des Azofarbstoffes durch Behandeln mit Natriumsulfid in schwach alkalischer Lösung bei 70°C zur Aminogruppe reduziert. Das Reaktionsprodukt wird durch Ansäuern mit Salzsäure gefällt, filtriert und in 400 ml Wasser durch Zusatz von ca. 20 ml 10 n Natronlauge wieder gelöst. Beim Zutropfen einer wäßrigen Lösung von 11,9 g $CoCl_2.6H_2O$ bei 70°C und pH bis 9 bildet sich der Kobalt-1:2-Komplex. Es folgt die Acylierung mit einer Lösung von 16,9 g 2,4,6-Trifluor-5-chlorpyrimidin in 60 ml Aceton bei 15 bis 20°C und pH 6 bis 7. Nach Eindunsten der Lösung auf dem Wasserbad und Vermahlen des Rückstandes erhält man den Farbstoff der Formel

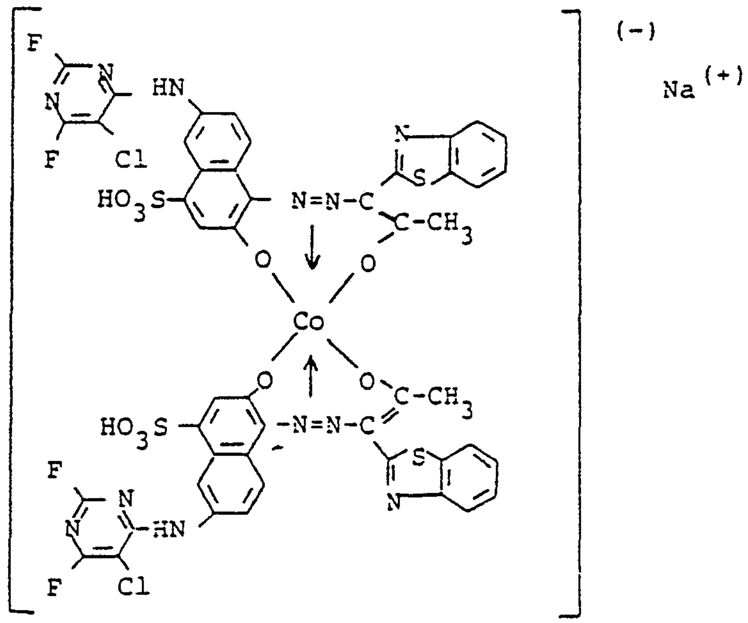

in Form eines schwarzbraunen Pulvers, welches auf Baumwolle unter den üblichen Bedingungen blaustichig braune Drucke mit guten Licht- und Naßechtheiten liefert.

Ganz analog erhält man bei Verwendung der in der folgenden Tabelle angegebenen Ausgangskomponenten wertvolle braune 1:2-Kobaltkomplexfarbstoffe.

| Beispiel | Diazokomponente | Kupplungskomponente | Reaktivkomponente |
|---|---|---|---|
| 28 | 6-Nitro-1-amino-2-hydroxy-naphthalin-4-sulfonsäure | 2-Acetonylbenzthiazol | 2,4-Difluor-6-(3'-sulfo-phenylamino)-triazin |
| 29 | 4-Nitro-2-aminobenzoe-säure | Gemisch 2-Acetonylbenzthia-zol-5- und -6-sulfonsäure | 2,4,6-Trifluoro-5-chlorpyrimidin |
| 30 | 5-Nitro-2-aminobenzoe-säure | " | 2,3-Dichlorchinoxalin-6-carbonsäurechlorid |
| 31 | " | 2-Acetonylbenzthiazol | 2,4-Difluor-6-(3'-sulfo-phenylamino)-triazin |
| 32 | 2-Aminobenzoesäure-5-säure | 6-Nitro-2-acetonylbenz-thiazol | " |

Beispiel 33

20,2 g 1-N-Ethyl-2-acetonylbenzimidazol werden in 400 ml Wasser und 12 ml 10 n Salzsäure gelöst und mit 24,6 g diazotierter 2-Amino-6-acetamino-1-hydroxybenzol-4-sulfonsäure versetzt. Beim Abstumpfen mit Natriumacetatlösung setzt sofort die Kupplung ein, die rasch beendet ist. Es folgt die Verseifung der Acetaminogruppe durch Erhitzen in salzsaurer Lösung, die Kobaltierung in alkalischer Lösung mit 11,9 g $CoCl_2.6H_2O$ bei 70°C und die Isolierung des Kobaltkomplexes nach Aussalzen mit 10% Kochsalz. Die

erhaltene Paste wird in 400 ml Wasser gelöst und mit einer acetonischen Lösung von 16,9 g 2,4,6-Trifluor-5-chlorpyrimidin bei 15 bis 20°C und pH 6 bis 7 zu dem Farbstoff der Formel

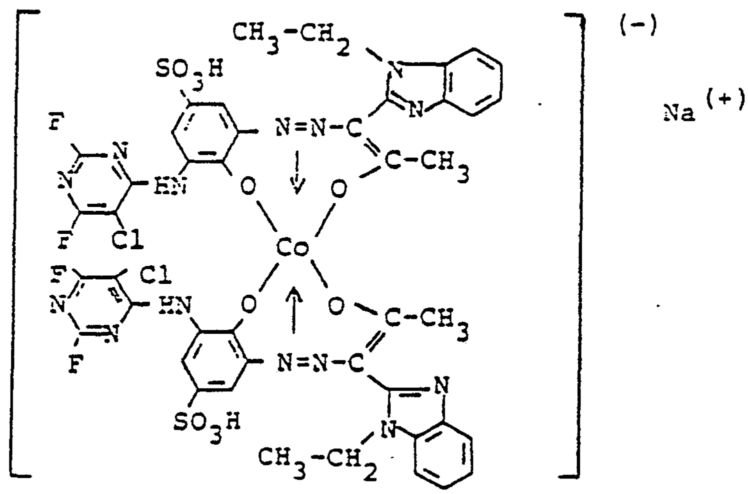

kondensiert. Dieser liegt nach Eindunsten des Reaktionsgemisches und Mörsern des Rückstandes als braunes Pulver vor, welches Wolle und Polyamid in gelbbraunen Tönen färbt.

Beispiel 34

Der 1:2-Chromkomplexfarbstoff der Formel

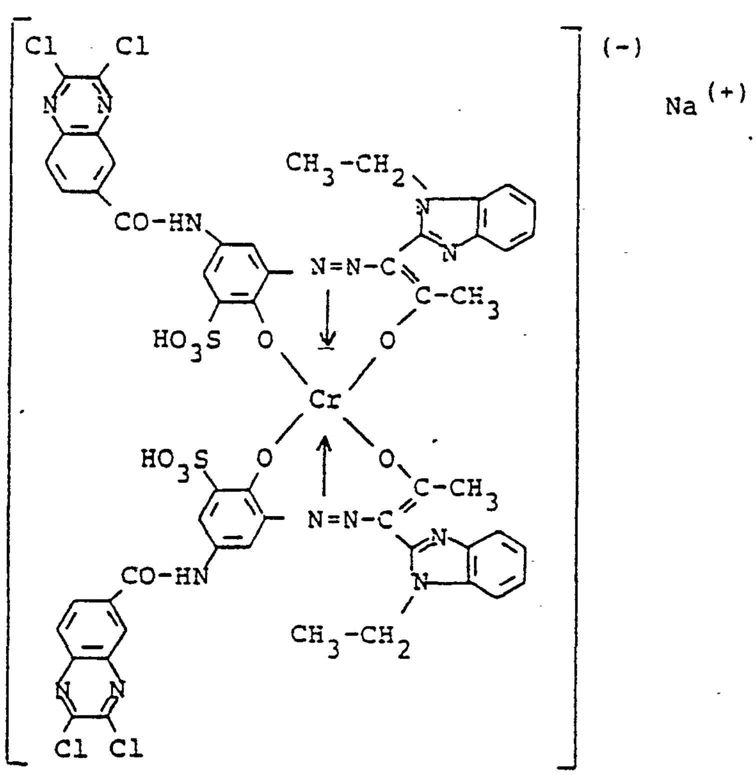

hergestellt aus diazotierter 4-Acetamino-2-amino-1-hydroxybenzol-6-sulfonsäure und 1-N-Ethyl-2-acetonylbenzimidazol, basischem Chromacetat und 2,3-Dichlorchinoxalin-6-carbonsäurechlorid, färbt Baumvolle in orangenen Farbtönen.

Eine Reihe weiterer wertvoller brauner Farbstoffe erhält man, wenn man zu ihrer Herstellung $CoCl_2.6H_2O$ als Metallisierungsmittel und die folgenden Diazokomponenten, Acetonylbenzimidazole und Reaktivkomponenten als Ausgangsprodukte verwendet. Dabei wird die für die Kondensation mit der Reaktivkomponente benötigte Aminogruppe vorzugsweise nach der Kupplung entweder durch Natriumsulfidreduktion einer Nitro- oder durch salzsaure Verseifung einer Acetaminogruppe erhalten.

| Beispiel | Diazokomponente | Kupplungskomponente | Reaktivkomponente |
|---|---|---|---|
| 35 | 4-Nitro-2-amino-1-hydroxy-benzol-6-sulfonsäure | 1-N-Ethyl-2-acetonyl-benzamidazol | 2,4,6-Trifluor-5-chlor-pyrimidin |
| 36 | 6-Nitro-1-amino-2-hydroxy-naphthalin-4-sulfonsäure | " | " |
| 37 | 4-(4'-Acetamino-2'-sulfobenzol-azo)-2-amino-1-hydroxybenzol | 1-N-Phenyl-2-acetonyl-benzimidazol | 2,4-Dichlor-6-(3'-sulfobenzo-amino)-triazin |
| 38 | 4-Nitro-2-amino-1-hydroxy-benzol | 1-N-Ethyl-2-acetonylbenz-imidazol-5-sulfonsäure | " |
| 39 | 6-Acetamino-4-chlor-2-amino-1-hydroxybenzol | " | 2,4,6-Trifluor-5-chlor-pyrimidin |
| 40 | 4-Acetamino-6-chlor-2-amino-1-hydroxybenzol | " | " |
| 41 | 5-Nitro-2-amino-benzoe-säure | 1-N-Phenyl-2-acetonyl-benz-imidazol-5-sulfonsäure | 2-Methylsulfonyl-4,5-dichlor-6-methylpyrimidin |
| 42 | 6-Acetamino-2-amino-1-hydroxybenzol-4-sulfonsäure | 1-N-Phenyl-2-acetonyl-benz-imidazol-5-sulfonamid | 2,4-Difluor-6-(3'-sulfo-benzolamino)-triazin |
| 43 | " | 1-N-Phenyl-2-acetonylbenz-imidazol-5-dimethyl-sulfonamid | " |
| 44 | " | 1-N-Ethyl-2-acetonylbenz-imidazol-5-sulfonanilid | " |
| 45 | " | 1-N-Ethyl-2-acetonylbenz-imidazol-5-ethylsulfonyl | 2,3-Dibrompropionyl-chlorid |
| 46 | 1-Amino-2-hydroxynaph-thalin-4-sulfonsäure | 1-N-(4'-Acetaminophenyl)-2-acetonylbenzimidazol | 2,4,6-Trifluor-5-chlor-pyrimidin |
| 47 | 4-Nitro-2-amino-1-hydroxy-benzol-6-sulfonsäure | 1-N-(4'-Acetaminophenyl)-2-acetonylbenzimidazol | Cyanurchlorid |
| 48 | 6-Chlor-2-amino-1-hydroxy-benzol-4-sulfonsäure | " | 2,4-Dichlor-6-aminotriazin |
| 49 | 6-Nitro-2-hydroxy-1-amino-naphthalin-4-sulfonsäure | 1-N-(4'-Acetaminophenyl)-2-acetonylbenzimidazol-5-sulfonamid | 3-Chlor-2-phenylsulfonyl-propionylchlorid |
| 50 | 2-Aminobenzoesäure-4-sulfonsäure | " | 2,4-Difluor-6-(3'-sulfo-benzolamino)-triazin |
| 51 | 2-Aminobenzoesäure-5-sulfonsäure | 1-N-(4'-Acetaminophenyl)-2-acetonylbenzimidazol | " |
| 52 | 4-(3'-Sulfobenzolazo)-2-amino-1-hydroxybenzol | " | " |
| 53 | 4-Nitro-2-amino-1-hydroxy-benzol | 1-N-(4'-Acetaminophenyl)-2-acetonylbenzimidazol-5-sulfonsäure | 2,4,5,6-Tetrachlor-pyrimidin |
| 54 | 5-Nitro-2-amino-1-hydroxy-benzol | " | 2,4,6-Trifluor-5-chlor-pyrimidin |

| Beispiel | Diazokomponente | Kupplungskomponente | Reaktivkomponente |
|---|---|---|---|
| 55 | 4-Nitro-6-chlor-2-amino-1-hydroxybenzol | 1-N-(4'-Acetaminophenyl)-2-acetonylbenzimidazol-5-sulfonsäure | 2,4,6-Trifluor-5-chlor-pyrimidin |
| 56 | 4-Chlor-6-nitro-2-amino-1-hydroxybenzol | " | " |
| 57 | 4-Chlor-2-amino-1-hydroxy-benzol | " | " |
| 58 | 4,6-Dichlor-2-amino-1-hydroxybenzol | " | " |
| 59 | 4,6-Dinitro-2-amino-1-hydroxybenzol | " | 2,3-Dibrompropionyl-chlorid |
| 60 | 2-Amino-1-hydroxybenzol | " | 2,3-Dichlorchinoxalin-6-carbonsäurechlorid |
| 61 | 2-Aminobenzoesäure | " | " |
| 62 | 5-Chlor-2-aminobenzoesäure | " | " |
| 63 | 2-Aminobenzoesäure-4-sulfonamid | " | 2,4,6-Trifluor-5-chlor-pyrimidin |
| 64 | 4-Nitro-2-aminobenzoesäure | " | 2-Methylsulfonyl-4,5-di-chlor-6-methylpyrimidin |
| 65 | 5-Nitro-2-aminobenzoesäure | " | " |
| 66 | 2-Amino-1-hydroxybenzol-4-sulfonamid | " | " |
| 67 | 2-Amino-1-hydroxybenzol-4-ethylsulfonyl | " | 2,4-Difluor-6-(4'-sulfo-benzolamino)-triazin |
| 68 | 2-Amino-1-hydroxybenzol-5-sulfonamid | " | 2,4-Difluor-6-(3'-sulfo-benzolamino)-triazin |
| 69 | 2-Amino-1-hydroxybenzol-5-dimethylsulfonamid | " | " |
| 70 | 4-Methyl-2-amino-1-hydroxybenzol | " | " |

Beispiel 17

Der Farbstoff der Formel

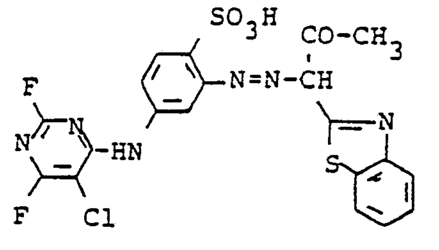

hergestellt durch Reaktion von diazotierter 1-Amino-5-acetaminobenzol-2-sulfonsäure mit 2-acetonylbenzthiazol, saure Verseifung des Kupplungsproduktes und nachfolgende Kondensation mit einer acetonischen Lösung von 2,4,6-Trifluoro-5-chlorpyrimidinl, stellt, ein hellbraunes Pulver dar, welches Wolle in gelben licht- und naßechten Tönen färbt.

Zu gelben Farbstoffen mit änlich guten Eigenschaften gelangt man, wenn man zu ihrer Herstellung die im folgenden aufgeführeten Zwischenprodukte verwendet:

| Beispiel | Diazokomponente | Kupplungskomponente | Reaktivkomponente |
|---|---|---|---|
| 72 | 1-Aminobenzol-2,5-disulfonsäure | 6-Acetamino-2-acetonylbenzthiazol | 2,3-Dichlorchinoxalin-6-carbonsäurechlorid |
| 73 | " | 1-N-(4'-Acetaminobenzol)-2-acetonylbenzimidazol-5-sulfonsäure | " |
| 74 | 1-Amino-4-acetylamino-benzol-2-sulfonsäure | 6-Methoxy-2-acetonylbenzthiazol | 2,4-Difluor-6-(3'-sulfo-benzolamino)-triazin |
| 75 | 1-Amino-4-acetylamino-5-methoxybenzol-2-sulfonsäure | 2-Acetonylbenzthiazol | " |
| 76 | " | 1-N-Ethyl-2-acetonylbenzimidazol-5-sulfonsäure | " |
| 77 | 1-Amino-5-(3'-acetylamino-benzoylamino)-benzol-2-sulfonsäure | " | " |
| 78 | 1-Amino-5-acetylamino-naphthalin-3,7-disulfonsäure | 2-Acetonylbenzthiazol | " |
| 79 | 2-Amino-6-acetylamino-naphthalin-4,6-disulfonsäure | " | 2,4,6-Trifluor-5-chlor-pyrimidin |
| 80 | " | 1-N-Phenyl-2-acetonylbenzimidazol | " |
| 81 | 1-Amino-4-nitrobenzol-3-sulfonsäure | " | 2,4-Dichlor-6-amino-triazin |
| 82 | 4-Amino-4'-nitrostilben-2,2'-disulfonsäure | 2-Acetonylbenzthiazol | 2,4-Dichlor-6-(3'-sulfo-benzolamino)-triazin |

**Patentansprüche**

1. Farbstoff der Formel

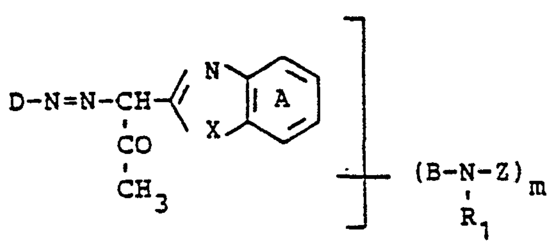

worin

D aromatisch-carboxcyclischer oder aromatisch-heterocyclischer Rest, insbesondere Rest einer Diazokomponente,

X O, S, $N-R_2$

B direkte Bindung oder Brückenglied

Z faseraktiver Rest

$R_1$ Wasserstoff, Alkyl

$R_2$ Wasserstoff, Alkyl, Aryl, Aralkyl oder Cycloalkyl

m 1 oder 2

und worin der Ring A weitere Substituenten enthalten kann, und deren Metallkomplexe.

2. Farbstoffe des Anspruchs 1 der Formel

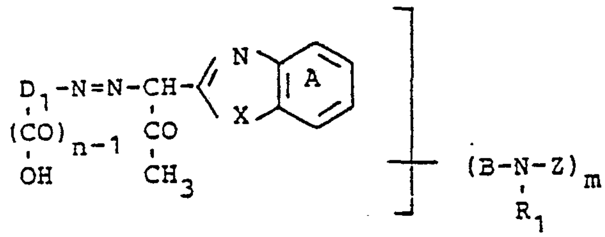

worin

$D_1$ = vicinal 2-wertiger Rest der Benzol- oder Naphthalinreihe und

n und m 1 oder 2

und die restlichen Substituenten die in Anspruch 1 angegebene Bedeutung haben und deren Metallkomplexe, insbesondere die Kupfer-, Kobalt- und Chromkomplexe.

3. Kupfer-, Kobalt- und Chromkomplexe von Monoazoverbindungen der Formel

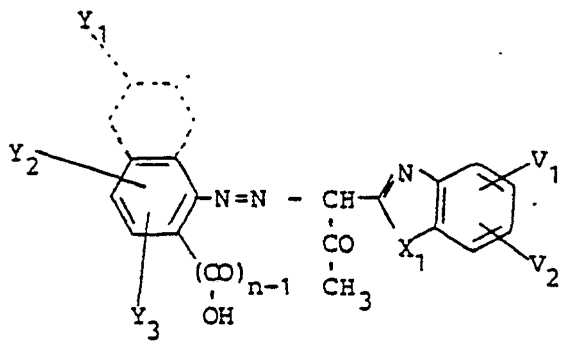

worin

n 1 oder 2

$X_1$ Schwefel oder $NR_3$

$Y_1$ Wasserstoff, $NO_2$, $SO_3H$ oder

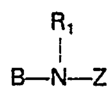

$Y_2$ Wasserstoff, $NO_2$, Cl, $SO_3H$ oder

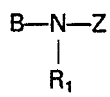

$Y_3$ Wasserstoff, $NO_2$, Cl, Alkyl, Alkoxy, Alkylsulfonyl, Arylsulfonyl, $SO_3H$, $SO_2NW_1W_2$ oder Arylazo

$W_1$ und $W_2$ Wasserstoff oder Alkyl

$V_1$ Wasserstoff, Alkyl, Alkoxy, Cl, Br, $NO_2$, SCN, CN, Alkylsulfonyl, Arylsulfonyl, $SO_2—NW_1W_2$, $SO_3H$, $COOW_1$ oder

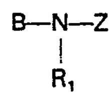

$V_2$ Wasserstoff, Alkyl, Alkoxy, Cl oder Br

$R_3$ Wasserstoff, Alkyl, Aralkyl oder Aryl

B eine direkte Bindung oder ein zweiwertiges Brückenglied

$R_1$ Wasserstoff oder Alkyl und

Z Rest einer Reaktivkomponente

bedeuten,

mit 1—2 Gruppen

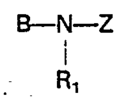

4. Kobaltkomplexe des Anspruchs 3 mit

$X_1$ Schwefel oder $NR_3$

$Y_1$ Wasserstoff, $NO_2$, $SO_3H$ oder

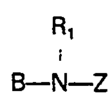

$Y_2$ Wasserstoff, $NO_2$, Cl, $SO_3H$ oder

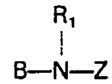

$Y_3$ Wasserstoff, $NO_2$, Cl, $CH_3$, $OCH_3$, $C_1$—$C_2$-Alkylsulfonyl, $SO_3H$, $SO_2NW_1W_2$ oder Arylzao

$W_1$ und $W_2$ Wasserstoff oder $C_1$—$C_2$-Alkyl

$V_1$ Wasserstoff, $CH_3$, $OCH_3$, Cl, Br, $NO_2$, SCN, $C_1$—$C_2$-Alkylsulfonyl, $COOW_1$ oder

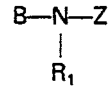

$V_2$ Wasserstoff, $CH_3$, Cl oder Br.

5. Unsymmetrische 1:2-Metallkomplexe auf Basis eines metallfreiem Farbstoffs der Ansprüche 2—4 und eines Farbstoffs der Formel

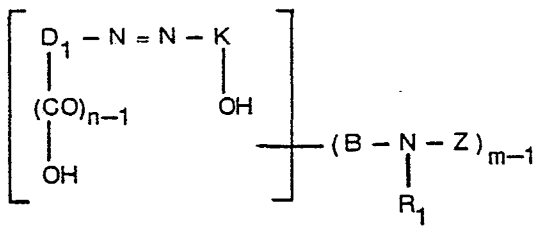

worin

$D_1$ n, m, B, Z und $R_1$ die obengenannte Bedeutung haben und

K eine von der Kupplungskomponente der Farbstoffe der Ansprüche 2—4 verschiedene Kupplungskomponente, insbesondere eine der Acetessigsäurearylid-, Pyrazol-, 6-Hydroxy-2-pyridon- und Naphtholreihe bedeutet.

6. Kobaltmischkomponente gemäß Anspruch 5 der Formel

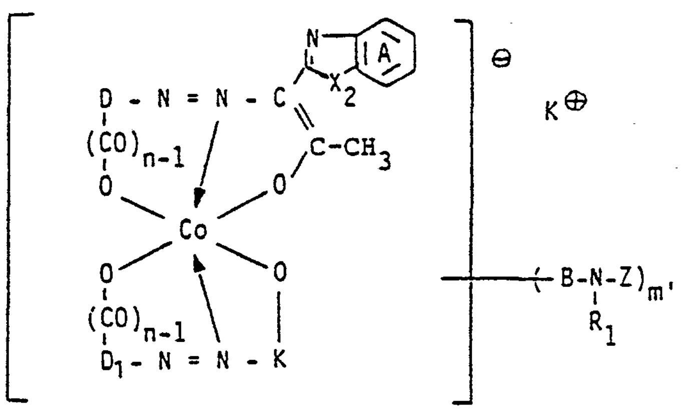

worin

$X_2$ Schwefel, gegenbenenfalls substituiertes N-Phenyl, insbesondere durch Cl, $CH_3$, $OCH_3$, COOH, $SO_3H$, $SO_2$—$NH_2$ oder NH—Z substituiertes N-Phenyl oder N—$C_1$—$C_4$-Alkyl,

$K^{\oplus}$ ein Kation, vorzugsweise ein Alkaliion, wie $Li^{\oplus}$ oder $Na^{\oplus}$, oder ein Ammonium, wie $NH_4^{\oplus}$ oder Alkyl-, Dialkyl- oder Trialkylammonium wie beispielsweise Diethanolammonium oder Triethanolammonium, und

m' 1, 2 oder 3 bedeuten,

sowie deren Mischungen mit den beiden entsprechenden symmetrischen Kobalt-1:2-Komplexen, wobei der Farbstoff gemäß Anspruch 1 mindestens einen Reaktivrest enthält.

7. Kobaltmischkimplexe gemäß Anspruch 5 oder 6 der Formel

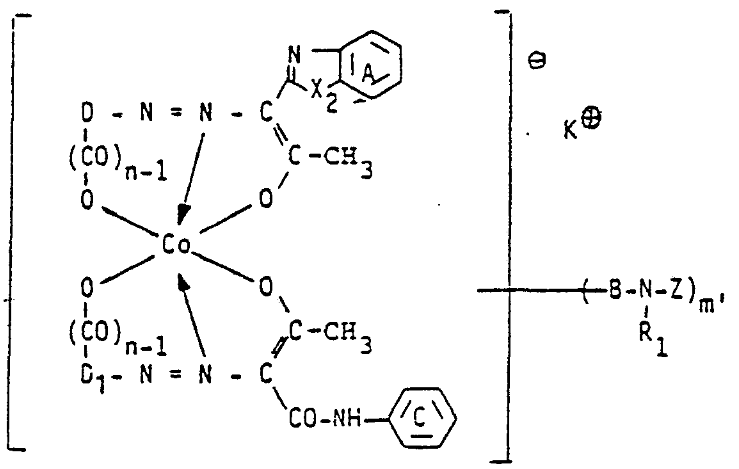

worin der Ring C übliche Substituenten aufweisen kann und der Farbstoff gemäss Anspruch 1 mindestens einen Reaktivrest enthält und deren Mischungen mit den entsprechenden symmetrischen 1:2-Kobaltkomplexen.

8. Farbstoffe der Ansprüche 1—7 mit X, $X_1$, $X_2$ = S und nicht weitersubstituiertem Ring A.

9. Verwendung der Farbstoffe der Ansprüche 1—8 zum Färben und Bedrucken von hydroxylgruppen- und stickstoffhaltigen Materialien.

10. Mit den Farbstoffen der Ansprüche 1—8 gefärbte oder bedruckte hydroxylgruppen- oder stickstoffhaltige Materialien.

**Claims**

1. Dyestuffs of the formula

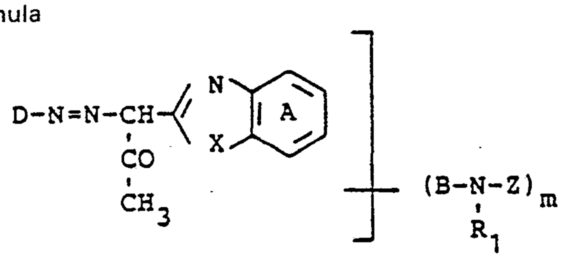

wherein

D an aromatic-carboxylic or aromatic-heterocyclic radical, in particular the radical of a diazo component,

X O, S or N—$R_2$,

B a direct bond or bridge-member,

Z a fibre-active radical,

$R_1$ hydrogen or alkyl,

$R_2$ hydrogen, alkyl, aryl, aralkyl or cycloalkyl, and

m 1 or 2,

and wherein

the ring A can contain further substituents, and metal complexes thereof.

2. Dyestuffs of Claim 1 of the formula

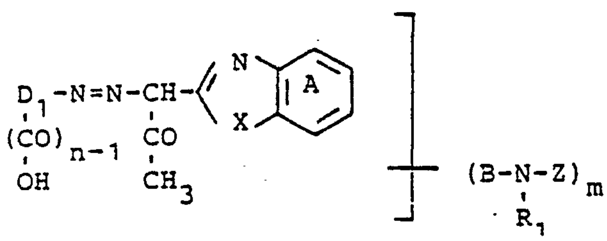

wherein

$D_1$ = a vicinal 2-valent radical of the benzene or naphthalene series and

n and m = 1 or 2

and the remaining substituents have the meaning given in Claim 1 and metal complexes thereof, in particular the copper, cobalt and chromium complexes.

3. Copper, cobalt and chromium complexes of monoazo compounds of the formula

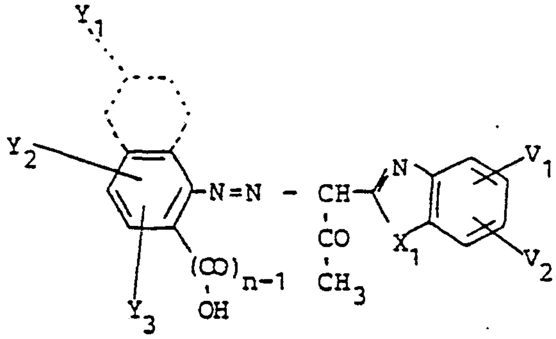

wherein

n denotes 1 or 2,

$X_1$ denotes sulphur or $NR_3$,

$Y_1$ denotes hydrogen, $NO_2$, $SO_3H$ or

$$\begin{array}{c} R_1 \\ | \\ B-N-Z, \end{array}$$

$Y_2$ denotes hydrogen, $NO_2$, Cl, $SO_3H$ or

$$\begin{array}{c} B-N-Z \\ | \\ R_1 \end{array}$$

$Y_3$ denotes hydrogen, $NO_2$, Cl, alkyl, alkoxy, alkylsulphonyl, arylsulphonyl, $SO_3H$, $SO_2NW_1W_2$ or arylazo,

$W_1$ and $W_2$ denote hydrogen or alkyl,

$V_1$ denotes hydrogen, alkyl, alkoxy, Cl, Br, $NO_2$, SCN, CN, alkylsulphonyl, arylsulphonyl, $SO_2$—$NW_1W_2$, $SO_3H$, $COOW_1$ or

$$\begin{array}{c} B-N-Z \\ | \\ R_1 \end{array}$$

$V_2$ denotes hydrogen, alkyl, alkoxy, Cl or Br,

$R_3$ denotes hydrogen, alkyl, aralkyl or aryl,

B denotes a direct bond or a divalent bridge member,

$R_1$ denotes hydrogen or alkyl and

Z denotes the radical of a reactive component, with 1—2 groups

$$\begin{array}{c} B-N-Z. \\ | \\ R_1 \end{array}$$

4. Cobalt complexes of Claim 3 in which

$X_1$ sulphur or $NR_3$,

$Y_1$ hydrogen, $NO_2$, $SO_3H$ or

$$\begin{array}{c} R_1 \\ | \\ B-N-Z \end{array}$$

$Y_2$ hydrogen, $NO_2$, Cl, $SO_3H$ or

$$\begin{array}{c} R^1 \\ | \\ B-N-Z \end{array}$$

$Y_3$ hydrogen, $NO_2$, Cl, $CH_3$, $OCH_3$, $C_1$—$C_2$-alkylsulphonyl, $SO_3H$, $SO_2NW_1W_2$ or arylazo,

$W_1$ and $W_2$ hydrogen or $C_1$—$C_2$-alkyl,

$V_1$ hydrogen, $CH_3$, $OCH_3$, Cl, Br, $NO_2$, SCN, $C_1$—$C_2$-alkylsulfonyl, $COOW_1$ or

$$\begin{array}{c} B-N-Z, \\ | \\ R_1 \end{array}$$

and

$V_2$ hydrogen, $CH_3$, Cl or Br.

5. Asymmetric 1:2 metal complexes based on a metal-free dyestuff of Claims 2—4 and a dyestuff of the formula

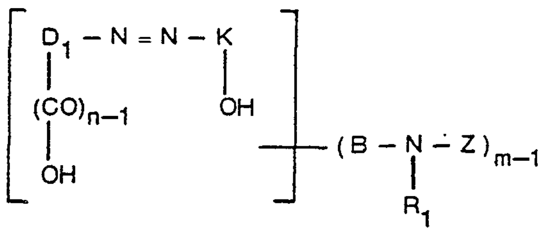

wherein

$D_1$, n, m, B, Z and $R_1$ have the abovementioned meaning and

K denotes a coupling component which is different from the coupling component of the dyestuffs of Claims 2—4, in particular a coupling component from the acetoacetic acid arylide, pyrazole, 6-hydroxy-2-pyridone and naphthol series.

6. Cobalt mixed component according to Claim 5 of the formula

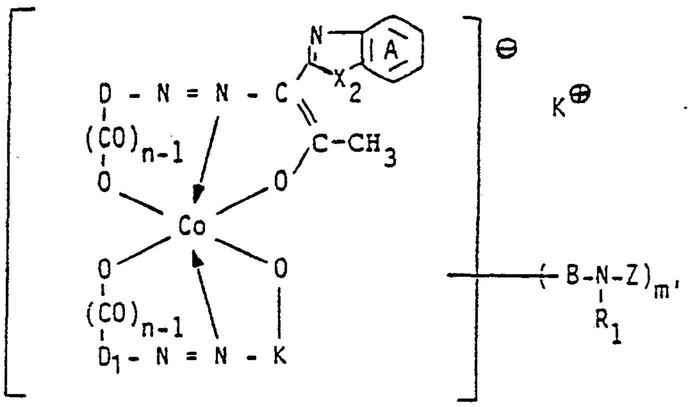

wherein

$X_2$ denotes sulphur, optionally substituted N-phenyl, in particular Cl—, $CH_3$—, $OCH_3$—, COOH—, $SO_3H$—, $SO_2$—$NH_2$— or NH—Z-substituted N-phenyl or N—$C_1$—$C_4$-alkyl,

$K^{\oplus}$ denotes a cation, preferably an alkali metal ion, such as $Li^{\oplus}$ or $Na^{\oplus}$, or an ammonium, such as $NH_4^{\oplus}$ or alkyl-, dialkyl- or trialkylammonium such as for example diethanolammonium or triethanolammonium, and

m' denotes 1, 2 or 3,

and mixtures thereof with the two corresponding symmetric cobalt 1:2 complexes, the dyestuff according to Claim 1 containing at least one reactive radical.

7. Cobalt mixed complexes according to Claim 5 or 6 of the formula

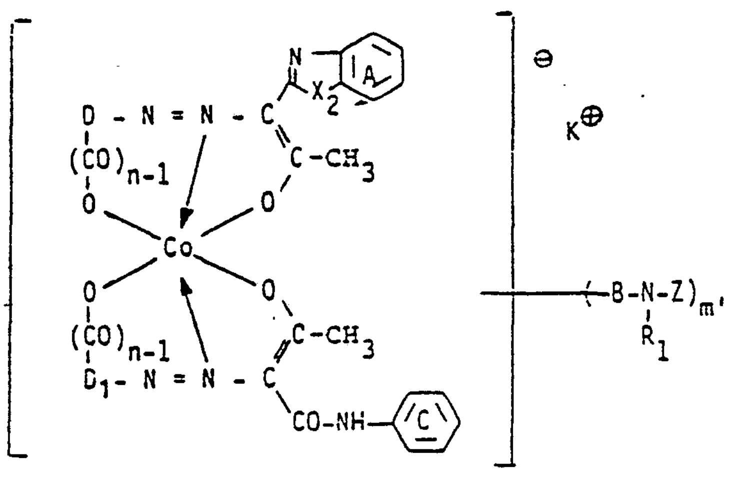

wherein

the ring C can contain customary substituents and the dyestuff according to Claim 1 contains at least one reactive radical and mixtures thereof with the corresponding 1:2 cobalt complexes.

8. Dyestuffs of Claims 1—7 in which X, $X_1$ and $X_2$ = S and ring A does not contain further substituents.

9. Use of the dyestuffs of Claims 1—8 for dyeing and printing hydroxyl-group- and nitrogen-containing materials.

10. Hydroxyl-group- or nitrogen-containing materials dyed or printed with the dyestuffs of Claims 1—8.

**Revendications**

1. Colorants de formule

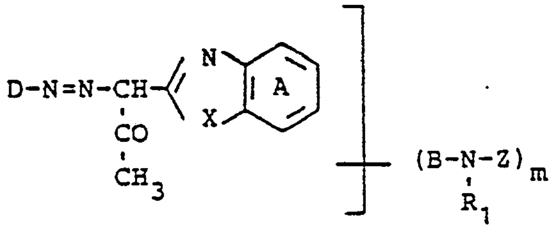

dans laquelle

D représente un reste aromatique-carbocyclique ou aromatique-hétérocyclique, en particulier le reste d'un composant diazotable,

X représente O, S, N—$R_2$

B représente une liaison directe ou un pont,

Z représente un reste actif à l'égard des fibres,

$R_1$ représente l'hydrogène, un groupe alkyle,

$R_2$ représente l'hydrogène, un groupe alkyle, aryle, aralkyle ou cycloalkyle,

m est egal à 1 ou 2,

le cycle A pouvant porter d'autres substituants, et leurs complexes métalliques.

2. Colorants de la revendication 1 de formule

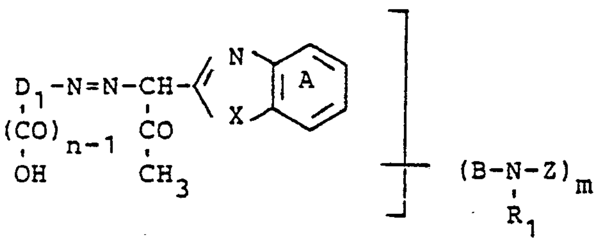

dans laquelle

$D_1$ est un reste divalent vicinal de la série benzénique ou naphtalénique, et

n et m = 1 ou 2,

les autres substituants ayant les significations indiquées dans la revendication 1, et leurs complexes métalliques, en particulier les complexes de cuivre, de cobalt et de chrome.

3. Complexes de cuivre, de cobalt et de chrome de composés monoazoïques de formule

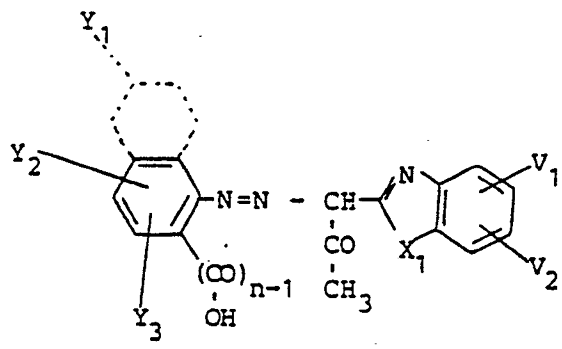

dans laquelle

n = 1 ou 2,

$X_1$ représente le soufre ou $NR_3$

$Y_1$ représente l'hydrogène, $NO_2$, $SO_3H$ ou

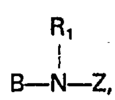

$Y_2$ représente l'hydrogène, $NO_2$, Cl, $SO_3H$ ou

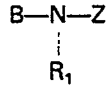

$Y_3$ représente l'hydrogène, $NO_2$, Cl, un groupe alkyle, alcoxy, alkylsulfonyle, arylsulfonyle, $SO_3H$, $SO_2NW_1W_2$ ou un groupe arylazo,

$W_1$ et $W_2$ représentent l'hydrogène ou des groupes alkyle,

$V_1$ représente l'hydrogène, un groupe alkyle, alcoxy, Cl, Br, $NO_2$, SCN, CN, un groupe alkylsulfonyle, arylsulfonyle, $SO_2—NW_1W_2$, $SO_3H$, $COOW_1$ ou

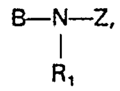

$V_2$ représente l'hydrogène, un groupe alkyle, alcoxy, Cl ou Br,

$R_3$ représente l'hydrogène, un groupe alkyle, aralkyle ou aryle,

B représente une liaison directe ou un point divalent,

$R_1$ représente l'hydrogène ou un groupe alkyle, et

Z représente le reste d'un composant réactif,

avec un ou deux groupes

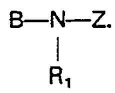

4. Complexes de cobalt de la revendication 3, dans lesquels:

$X_1$ représente le soufre ou $NR_3$,

$Y_1$ représente l'hydrogène, $NO_2$, $SO_3H$ ou

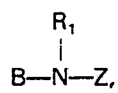

$Y_2$ représente l'hydrogène, $NO_2$, Cl, $SO_3H$ ou

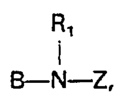

$Y_3$ représente l'hydrogène, $NO_2$, Cl, $CH_3$, $OCH_3$, un groupe alkylsulfonyle en $C_1—C_2$, $SO_3H$, $SO_2NW_1W_2$ ou arylazo,

$W_1$ et $W_2$ représentent l'hydrogène ou des groupes alkyle en $C_1—C_2$,

$V_1$ représente l'hydrogène, un groupe $CH_3$, $OCH_3$, Cl, Br, $NO_2$, SCN, alkylsulfonyle en $C_1—C_2$, $COOW_1$ ou

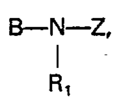

$V_2$ représente l'hydrogène, $CH_2$, Cl ou Br.

5. Complexes métalliques asymétriques 1:2 à base d'un colorant non métallisé des revendications 2 à 4 et d'un colorant de formule

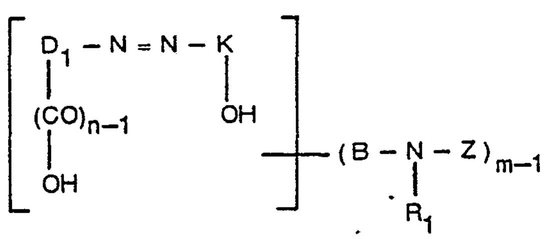

dans laquelle

$D_1$, n, m, B, Z et $R_1$ ont les significations indiquées ci-dessus, et

K représente un copulant différant des copulants des colorants des revendications 2 à 4, en particulier un copulant de la série des acétylacétoarylides, du pyrazole, de la 6-hydroxy-2-pyridone et du naphtol.

6. Composant mélangé de cobalt selon la revendication 3, de formule

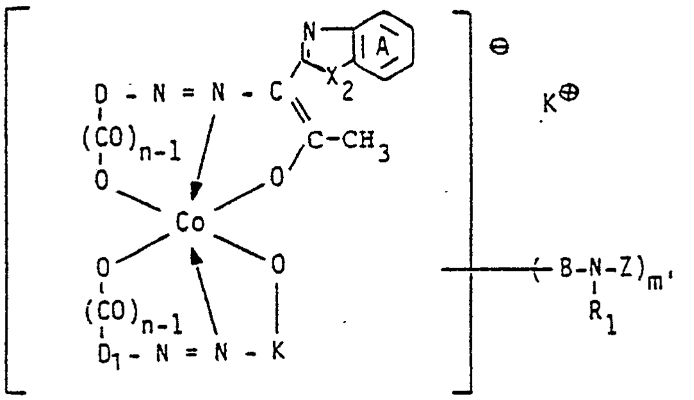

dans laquelle

$X_2$ représente le soufre, un groupe N-phényle éventuellement substitué, en particulier N-phényle substitué par Cl, $CH_3$, $OCH_3$, COOH, $SO_3H$, $SO_2$—$NH_2$ ou NH—Z, ou un groupe N-alkyle en $C_1$—$C_4$,

$K^{\oplus}$ représente un cation, de préférence un cation alcalin tel que $Li^{\oplus}$ ou $Na^{\oplus}$, ou un cation ammonium tel que $NH_4^{\oplus}$ ou alkyl-, dialkyl- ou trialkyl-ammonium, par exemple diéthanolammonium ou triéthanolammonium, et

m′ est égal à 1, 2 ou 3,

et leurs mélanges avec les deux complexes symétriques correspondants de cobalt 1:2, le colorant de la revendication 1 contenant au moins un reste réactif.

7. Complexes mélanges de cobalt selon la revendication 5 ou 6, de formule

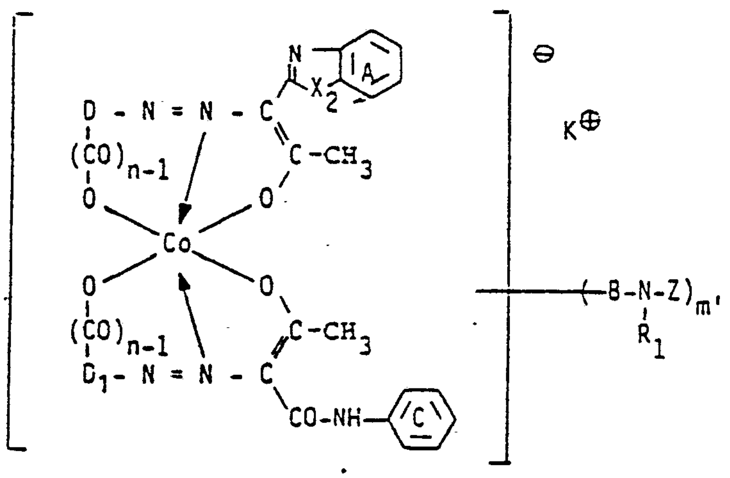

dans laquelle

le cycle C peut porter des substituants usuels et le colorant de la revendication 1 contient au moins un reste réactif, et leurs mélanges avec les complexes symétriques correspondants de cobalt 1:2.

8. Colorants des revendications 1 à 7, dans lesquels X, $X_1$, $X_2$ = S et le noyau A ne porte pas d'autres substituants.

9. Utilisation des colorants des revendications 1 à 8, pour la teinture et l'impression de matières contenant des groupes hydroxy et de matières azotées.

10. Matières contenant des groupes hydroxy ou matières azotées teintes ou imprimées à l'aide des colorants des revendications 1 à 8.